# EUROPÄISCHE PATENTSCHRIFT

(11) **EP 1 514 057 B1**
(45) Veröffentlichungstag und Bekanntmachung des Hinweises auf die Patenterteilung: **28.11.2007**
(21) Anmeldenummer: 02795252.2
(22) Anmeldetag: 20.12.2002
(51) Int. Cl.: F23J 3/04

(54) **KOHLEKRAFTWERK**
COAL-FIRED POWER STATION
CENTRALE A CHARBON

(30) Priorität: 20.06.2002 DE 10227639
(43) Veröffentlichungstag der Anmeldung: 16.03.2005
(73) Patentinhaber: STEAG encotec GmbH, 45128 Essen (DE)
(72) Erfinder: GROMMES, Klaus, 46562 Voerde (DE); SCHULTHOFF, Wolfgang, 46145 Oberhausen (DE)
(74) Vertreter: Wagner, Karl H.
(86) Internationale Anmeldenummer: PCT/EP2002/014633
(87) Internationale Veröffentlichungsnummer: WO 2004/001290

(56) Entgegenhaltungen:
- EP-A- 0 600 440
- EP-A- 0 764 455
- CA-A- 929 036
- DE-A- 4 436 207
- FR-A- 1 387 107

## Beschreibung

Die Erfindung betrifft ein Kohlekraftwerk mit einem Kessel, der von einer Trockenfeuerung beheizbar ist, und mit einem an den Kessel angeschlossenen Rauchgaskanal, der zu einem Entstickungs-Katalysator führt. Die Erfindung betrifft weiterhin einen Grobascheabscheider mit einem Rauchgaskanalabschnitt.

Bei Trockenfeuerungen fällt die Asche als trockener Staub an, der zum Teil unten aus dem Feuerungsraum abgezogen, zum Teil aber auch vom Rauchgasstrom mitgerissen wird. Der Entstickungs-Katalysator besteht aus Packungen von engen Kanälen, und der mitgerissene Staub hat die Tendenz, sich an den Katalysatorflächen abzulagern. Dies führt dazu, daß die Kanalwände zunehmend ihre katalytische Wirkung verlieren. Man ist daher gezwungen, die Katalysatoren abzureinigen, häufig unter Einsatz von Rußbläsern oder aber auch durch Anwendung von Ultraschall. Es wurde gefunden, daß dennoch die Tendenz besteht, daß sich die Katalysatorkanäle zusetzen, und zwar derart, daß die Verstopfungen mit konventionellen Mitteln nicht mehr beseitigt werden können.

Neben einer Verminderung der katalytischen Wirkung erhöht sich durch die Reduzierung des Strömungsquerschnitts der Druckverlust. Ähnliche Verstopfungseffekte wurden am nachgeschalteten, regenerativ arbeitenden Luftvorwärmer beobachtet. Der Druckverlust kann so stark werden, daß der stromab des Luftvorwärmers liegende Elektrofilter durch das nachgeschaltete Saugzuggebläse an seine Festigkeitsgrenzen gelangt. Dies kann dazu zwingen, die Last des Kraftwerks zu vermindern, eine Maßnahme, die nachteilig ist und außerdem selbstverständlich keine dauerhafte Lösung darstellt. Vielmehr muß über kurz oder lang das Kraftwerk stillgesetzt werden, um die verstopften Katalysatoren auszutauschen. Auch in ausgebautem Zustand erweist sich eine Beseitigung der Verstopfungen als kaum praktikabel.

Aus der Druckschrift DE 44 36 207 A ist ein Kohlekraftwerk mit einem Kessel und einem an ihn angeschlossenen Rauchgaskanal bekannt, der zu einem Entstickungs-Katalysator führt. Ein Grobascheabscheider ist stromaufwärts des Katalysators in einem Abschnitt des Rauchgaskanals angeordnet.

Die Druckschrift EP 0 764 455 A beschreibt ein Russfilter zum Abtrennen von kohlenstoffhaltigen Partikeln aus Abgasströmen von Dieselverbrennungsmaschinen.

Der Erfindung liegt die Aufgabe zugrunde, den Entstickungs-Katalysator in einfacher und wirksamer Weise gegen solche Verstopfungen zu schützen, die mit konventionellen Mitteln nicht mehr zu beseitigen sind.

Zur Lösung dieser Aufgabe kennzeichnet sich das erfindungsgemäße Kohlekraftwerk durch die Merkmale im Patentanspruch 1 und in Patentanspruch 5. Vorteilhafte Ausführungsformen des erfindungsgemäßen Kohlekraftwerks sind in den Unteransprüchen 2-4 und 6 angegeben. Die gestellte Aufgabe wird erfindungsgemäß auch durch einen Grobascheabscheider gemäß Anspruch 10 gelöst. Vorteilhafte Ausgestaltungen des Grobascheabscheiders sind in den Unteransprüchen 11-13 angegeben.

Der Erfindung liegt die Erkenntnis zugrunde, daß es in Abhängigkeit von der Art der Kohle und von der Temperaturverteilung innerhalb der Brennkammer zu örtlichen Überschreitungen des Ascheerweichungspunktes kommen kann. Dies führt dazu, daß die ursprünglich trockenen, pulverförmigen Aschepartikel miteinander verkleben oder sogar zusammensintern. Es entstehen grobe Aschepartikel, die zwar in die Katalysatorkanäle eintreten, sich dort aber verhaken können und gemeinsam die Verstopfungen aufbauen. Die Haftung innerhalb der Katalysatorkanäle reicht aus, eine Abreinigung mit normalen Mitteln auszuschließen. Theoretisch könnte man die einzelnen Kanäle durchstoßen, praktisch jedoch nicht, wenn man bedenkt, daß die Katalysatorkanäle jeweils einen Querschnitt von größenordnungsmäßig 50mm² aufweisen, während der Querschnitt des Abgaskanals bei größenordnungsmäßig 45m² liegt. Die Kanäle sind ca. 1m lang, und der Rauchgaskanal enthält 3 bis 4 derartiger Katalysatorebenen.

Die Erneuerung der Katalysatoren ist extrem kostenintensiv, und zwar zum einen wegen der unvermeidbaren Stillstandszeiten des Kraftwerks und zum anderen wegen der Beschaffungs- und Montagekosten der Katalysatoren.

Der erfindungsgemäße Grobascheabscheider verhindert, daß Aschepartikel solcher Größe, die eine Verstopfung der Katalysatorkanäle hervorrufen könnten, überhaupt zu den Katalysatoren kommen. Das Sieb weist eine entsprechende Maschenweite auf. Im übrigen erstreckt es sich im wesentlichen über den gesamten Querschnitt des Rauchgaskanals.

Von wesentlicher Bedeutung ist, daß das Sieb vom Rauchgasstrom in Bewegung gehalten wird. Der Rauchgasstrom unterliegt ständig geringfügigen Pulsationen, die ausreichen, die gewünschten Bewegungen oder Vibrationen des Siebes hervorzurufen. Hinzukommen heftige Änderungen des Rauchgasstroms, wenn nämlich die Last des Kraftwerks verfahren wird.

Die Bewegungen des Siebes führen dazu, daß die groben Aschepartikel, wenn sie denn an der Siebfläche haften sollten, abgeschüttelt werden. Dabei ist es besonders vorteilhaft, die Ruhestellung des Siebes durch einen Anschlag zu definieren, der die Rückstellbewegung des Siebes hin und wieder abrupt abbricht. Der dabei erzeugte Schlag läßt auch solche Partikel abspringen, die sich relativ fest im Sieb verhakt haben.

Das Sieb kann senkrecht zur Strömungsrichtung des Abgasstroms oder auch geneigt dazu angeordnet sein. Als Rückstellkraft kann die Kraft einer Feder eingesetzt werden. Vorteilhafter wird es in aller Regel sein, die Schwerkraft als Rückstellkraft zu benutzen. Auch kann man das Sieb elastisch im Rauchgaskanal verankern, wobei die Rückstellkraft in der gelenkigen Lagerung des Siebes erzeugt wird. Die Anlenkung des Siebes im Inneren des Rauchgaskanals kann unten, seitlich oder aber auch oben erfolgen.

Im letztgenannten Fall ist es besonders vorteilhaft, wenn der Abschnitt des Rauchgaskanals, in dem der Grobascheabscheider angeordnet ist, im wesentlichen horizontal verläuft und wenn das Sieb des Grobascheabscheiders gelenkig aufgehängt ist. Dies stellt eine sehr einfache und wirksame Konstruktion dar, wobei die Schwerkraft die Rückstellkraft liefert.

Dabei kann der die Ruhestellung des Siebes definierende Anschlag, bezogen auf die gelenkige Aufhängung des Siebes, stromabwärts versetzt sein. Dies bedeutet, daß das Sieb in seiner Ruhestellung eine gewisse Schräglage einnimmt und daß es beim Rückpendeln bereits vor Erreichen einer Vertikalposition auf den Anschlag trifft. Die Reinigungswirkung durch Abklopfen des Siebes ist also besonders intensiv.

Die Merkmale des Patentanspruchs 5 kennzeichnen eine Lösung der gestellten Aufgabe, die unabhängig von der bisher diskutierten Lösung zur Anwendung kommen kann, bevorzugt allerdings gemeinsam mit der bisher diskutierten Lösung angewendet wird. Die im wesentlichen parallel zueinander verlaufenden Falten des Siebes bewirken eine drastische Vergrößerung der Siebfläche und bieten damit die Möglichkeit, die Sieböffnungen relativ klein auszubilden. Es wurde gefunden, daß die kritische Größe der groben Aschepartikel bei ca. 5mm beginnt. Vorzugsweise wird man also die Größe der Sieböffnungen zu ca. 5mm x 5mm wählen. Zusätzlich zu diesem reinen Siebeffekt bewirkt die Faltenbildung noch eine verstärkte Selbstreinigung des Siebes. Die Partikel treffen schräg auf die Siebfläche auf, so daß ihre Bewegung eine Komponente parallel zur Siebfläche besitzt. Dies wirkt der Tendenz der Partikel entgegen, sich in den Sieböffnungen zu verhaken. Hinzukommt, daß auch der Abgasstrom eine gewisse Umlenkung und Verwirbelung erfährt, was ebenfalls den Selbstreinigungseffekt unterstützt.

Wesentlich ist, daß die Falten des Siebes stromaufwärts gerichtet sind und daß das Sieb selbst eine Orientierung besitzt, die die Partikel aus den Siebfalten herausfallen läßt. Ob das Sieb dabei senkrecht oder schräg angeströmt wird und ob es sich in einem horizontalen, einem vertikalen oder einem geneigten Rauchgaskanal befindet, spielt dabei keine Rolle.

Die Falten des Siebes können gewölbt sein. Vorteilhafter hingegen ist es, daß die Falten des Siebes von ebenen, winklig zueinander stehenden Flächenabschnitten gebildet werden. Dies schließt ein im wesentlichen senkrechtes Auftreffen der Partikel auf bestimmte Siebflächenbereiche aus.

In Weiterbildung der Erfindung wird vorgeschlagen, daß die Flächenabschnitte des Siebes an stromab angeordneten Stützgeflechten anliegen. Dadurch wird verhindert, daß sich das Sieb durchbeult. Wie erwähnt, betragen die Abmaße der Sieböffnungen 5mm x 5mm, wobei der Draht des Siebes einen Durchmesser von 1mm aufweist. Das Stützgeflecht hingegen besitzt vorzugsweise eine Maschengröße von 33mm x 33mm, und zwar bei einer Drahtstärke von ca. 3mm. Es wurde gefunden, daß bei diesen Abmaßen eine Erhöhung des Druckverlustes durch das Stützgeflecht minimal ist und daß andererseits das Sieb sehr zuverlässig gehalten wird.

Eine besonders einfache Konstruktion ergibt sich dadurch, daß die Flächenabschnitte des Siebes und die zugehörigen Stützgeflechte auf Rahmen gezogen sind, die an einem Traggestell befestigt sind. Bei auftretendem Verschleiß oder sonstigen Beschädigungen können die Rahmen einzeln ausgetauscht werden.

In wesentlicher Weiterbildung der Erfindung wird vorgeschlagen, daß sich der Abschnitt des Rauchgaskanals, der den Grobascheabscheider enthält, an einen Aschetrichter anschließt und daß der Grobascheabscheider am Übergang vom Aschetrichter zum Abschnitt des Rauchgaskanals angeordnet ist. Dies bewirkt, daß sämtliche vom Sieb des Grobascheabscheiders abfallenden Aschepartikel direkt in den Aschetrichter gelangen und in den regulären Entsorgungsweg für die Asche gelangen.

Die Erfindung wird im folgenden anhand eines bevorzugten Ausführungsbeispiels im Zusammenhang mit der beiliegenden Zeichnung näher erläutert. Die Zeichnung zeigt in:
Figur 1 eine schematische Darstellung eines Kohlekraftwerks;
Figur 2 ein Modul eines zugehörigen Entstickungs-Katalysators;
Figur 3 eine Teilansicht der Einbauten eines zugehörigen, regenerativen Luftvorwärmers;
Figur 4 in stark schematisierter Darstellung einen Horizontalschnitt durch ein Sieb eines Grobascheabscheiders;
Figur 5 eine rückwärtige Ansicht des Siebes nach Figur 4;
Figur 6 das Detail "A" aus Figur 4 in vergrößertem Maßstab.

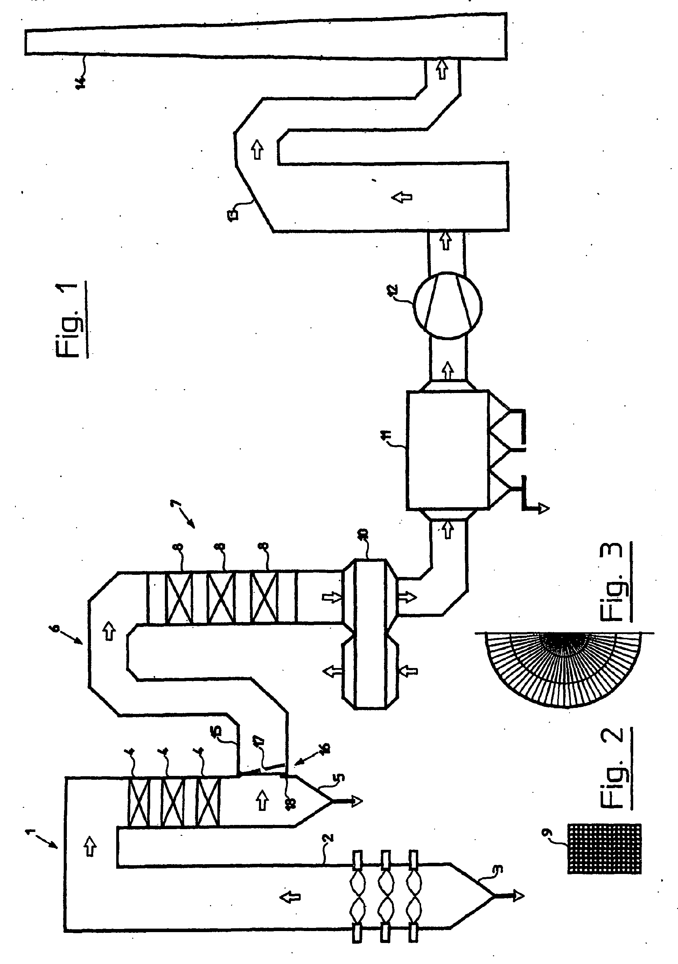

Das Kohlekraftwerk nach Figur 1 weist einen Kessel 1 mit einer Brennkammer 2 für eine Trockenfeuerung auf, wobei sich an die Brennkammer 2 ein Aschetrichter 3 anschließt. Zum Kessel 1 gehören ferner Wärmetauscher 4, an deren Gehäuse sich ein weiterer Aschetrichter 5 anschließt. Der Kessel 1 ist über einen Rauchgaskanal 6 mit einem Entstickungs-Katalysator 7 verbundne. Letzterer weist eine Mehrzahl von Katalysatorstufen 8 auf, die jeweils aus Modulen 9 (siehe Figur 2) zusammengesetzt sind. Die Abmaße der von den Modulen 9 gebildeten Kanäle betragen 7,1mm x 7,1mm x 1000mm.

An den Entstickungs-Katalysator 7 schließt sich ein regenerativ arbeitender Luftvorwärmer 10 an, dessen Einbauten aus der Halb-Darstellung nach Figur 3 ersichtlich sind. Es folgen ein Elektrofilter 11, ein Saugzuggebläse 12 und ein REA-Wäscher 13, von dem aus die gereinigten Rauchgase in einen Kamin 14 gelangen.

Der Rauchgaskanal 6 schließt sich mit einem horizontalen Abschnitt 15 an den Aschetrichter 5 an. An der Übergangsstelle ist ein Grobascheabscheider 16 vorgesehen, der ein pendelnd aufgehängtes Sieb 17 sowie einen die Ruhestellung des Siebes 17 definierenden Anschlag 18 umfaßt.

Während des Betriebes des Kraftwerks versetzt der Rauchgasstrom das Sieb 17 des Grobascheabscheiders 16 in pendelnde Bewegungen, und zwar aufgrund von Pulsationen im konstanten Abgasstrom sowie aufgrund von wechselnden Durchsätzen bei Laständerungen. Die pendelnden Bewegungen bewirken, daß verklebte oder gesinterte grobe Aschepartikel, die am Sieb 17 hängengeblieben sind, von diesem herabfallen und in den Aschetrichter 5 gelangen. Unterstützt wird dieser Effekt dadurch, daß das Sieb 17 hin und wieder am Anschlag 18 anschlägt, was zum Abschleudern der Partikel führt. Auf diese Weise werden die Kanäle der Katalysatorstufen 8 gegen den Eintritt grober Aschepartikel (> 5mm) geschützt, die sich sonst in den Kanälen festsetzen und diese verstopfen können. Gleichermaßen wird der Luftvorwärmer 10 geschützt.

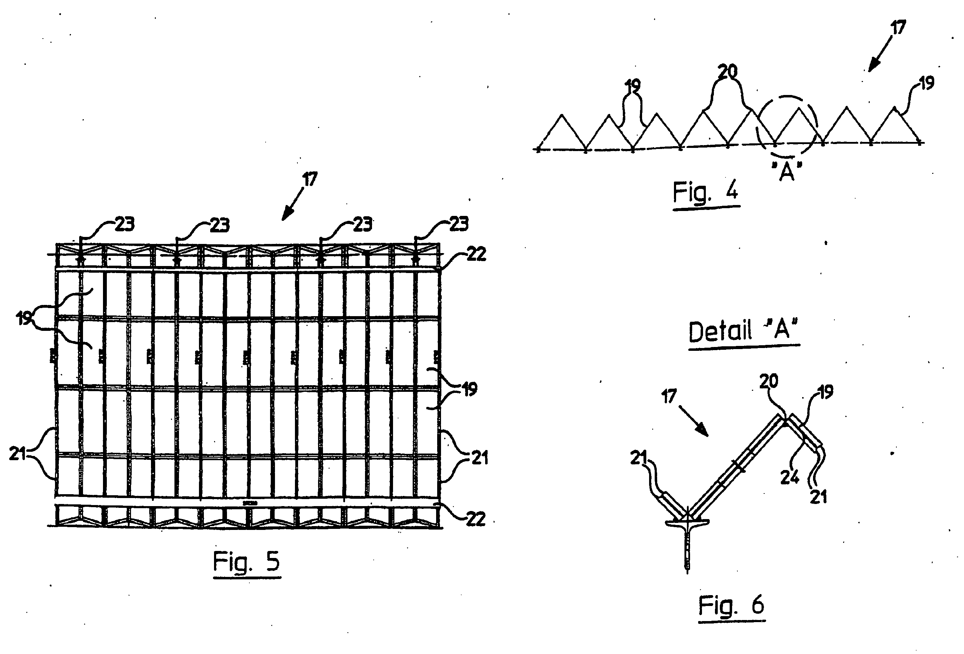

Der horizontale Schnitt gemäß Figur 4 zeigt, daß das Sieb 17 aus winklig zueinander stehenden, ebenen Flächenabschnitten 19 besteht. Diese bilden Falten 20, die gegen die Strömungsrichtung gerichtet sind. Die groben Aschepartikel treffen also schräg auf die Flächenabschnitte 19 und werden parallel zu diesen abgeleitet. Dadurch vermindert sich die Tendenz, daß sich die Aschepartikel in den Sieböffnungen verhaken. Im übrigen erhöht die faltenförmige Ausbildung des Siebes 17 dessen Durchtrittsfläche, so daß ohne Erhöhung des Druckverlustes mit relativ kleinen Sieböffnungen gearbeitet werden kann.

Figur 5 zeigt, daß die Flächenabschnitte 19 des Siebes 17 auf Rahmen 21 gezogen sind, die an einem Traggestell 22 befestigt sind und sich individuell austauschen lassen. Wie aus der rückwärtigen Ansicht nach Figur 5 ersichtlich, befindet sich das Traggestell 22 auf der stromab gelegenen Seite des Siebes 17.

Wie im Zusammenhang mit Figur 1 erläutert, ist das Sieb 17 pendelnd im Abschnitt 15 des Rauchgaskanals 6 aufgehängt. Hierzu dienen Hängelemente 23, die in Figur 5 dargestellt sind.

Aus der Detail-Darstellung nach Figur 6 geht hervor, daß die Flächenabschnitte 19 des Siebes 17 jeweils auf einem Stützgeflecht 24 ruhen und zusammen mit diesem auf den jeweils zugehörigen Rahmen 21 aufgezogen sind. Während die Sieböffnungen die Abmaße 5mm x 5mm bei einer Drahtstärke von 1mm aufweisen, beträgt die Maschengröße des Stützgeflechtes 33mm x 33mm bei einer Drahtstärke von 3mm. Die Stützgeflechte 24 verhindern ein Ausbeulen der zugehörigen Flächenabschnitte 19 des Siebes 17.

Im Rahmen der Erfindung sind durchaus Abwandlungsmöglichkeiten gegeben. Vor allen Dingen kann das Sieb bei pendelnder Aufhängung eben ausgebildet oder bei faltenförmiger Ausbildung starr im Rauchkanal angeordnet sein, obwohl die beschriebene Kombination dieser Merkmale besonders vorteilhaft ist. Anstelle der pendelnden Aufhängung kommen beliebige andere Befestigungsmöglichkeiten in Frage, auch solche, bei denen die Rückstellkraft nicht von der Schwerkraft, sondern von der Kraft einer Feder oder einer elastischen Anlenkung geliefert wird. Der Einsatz von Belastungsgewichten ist gleichermaßen möglich. Der die Ruhestellung definierende Anschlag kann eine Vorab-Auslenkung des Siebes bewirken. Die konstruktive Gestaltung nach den Figuren 5 und 6 ist zwar besonders vorteilhaft, jedoch auch durchaus abwandelbar.

## Patentansprüche

1. Kohlekraftwerk mit
- einem Kessel (1), der von einer Trockenfeuerung beheizbar ist,
- einem an den Kessel (1) angeschlossenen Rauchgaskanal (6), der zu einem Entstickung-Katalysator (7) führt, und
- einem Grobascheabscheider (16) der stromauf des Katalysators (7) in einem Abschnitt (15) des Rauchgaskanals (6) angeordnet ist und ein Sieb (17) aufweist, das sich im wesentlichen über den gesamten Querschnitt des Rauchgaskanals (6) erstreckt, **dadurch gekennzeichnet, dass**
das Sieb (17) des Grobascheabscheiders (16) vom Rauchgasstrom gegen die Wirkung einer Rückstellkraft aus einer Ruhestellung heraus auslenkbar ist.

2. Kohlekraftwerk nach Anspruch 1, **dadurch gekennzeichnet, daß** die Ruhestellung des Siebes (17) durch einen Anschlag (18) definiert ist.

3. Kohlekraftwerk nach Anspruch 1 oder 2, **dadurch gekennzeichnet, daß** der Abschnitt (15) des Rauchgaskanals (6), in dem der Grobascheabscheider (16) angeordnet ist, im wesentlichen horizontal verläuft und daß das Sieb (17) des Grobascheabscheiders (16) gelenkig aufgehängt ist.

4. Kohlekraftwerk nach Anspruch 3, **dadurch gekennzeichnet, daß** der die Ruhestellung des Siebes (17) definierende Anschlag (18), bezogen auf die gelenkige Aufhängung des Siebes (17), stromabwärts versetzt ist.

5. Kohlekraftwerk mit
- einem Kessel (1), der von einer Trockenfeuerung beheizbar ist,
- einem an den Kessel (1) angeschlossenen Rauchgaskanal (6), der zu einem Entstickungs-Katalysator (7) führt, und
- einem Grobascheabscheider (16), der stromauf des Katalysators (7) in einem Abschnitt (15) des Rauchgaskanals (6) angeordnet ist und ein Sieb (17) aufweist, das sich im wesentlichen über den gesamten Querschnitt des Rauchgaskanals (6) erstreckt, **dadurch gekennzeichnet, dass**
das Sieb (17) des Grobascheabscheiders (16) stromaufwärts gerichtete, im wesentlichen parallel zueinander verlaufende Falten (20) bildet.

6. Kohlekraftwerk nach Anspruch 5, **dadurch gekennzeichnet, daß** die Falten (20) des Siebes (17) von ebenen, winklig zueinander stehenden Flächenabschnitten (19) gebildet werden.

7. Kohlekraftwerk nach Anspruch 6, **dadurch gekennzeichnet, daß** die Flächenabschnitte (19) des Siebes (17) an stromab angeordneten Stützgeflechten (24) anliegen.

8. Kohlekraftwerk nach Anspruch 7, **dadurch gekennzeichnet, daß** die Flächenabschnitte (19) des Siebes (17) und die zugehörigen Stützgeflechte (24) auf Rahmen (21) gezogen sind, die an einem Traggestell (22) befestigt sind.

9. Kohlekraftwerk nach einem der Ansprüche 1 bis 8, **dadurch gekennzeichnet, daß** sich der Abschnitt (15) des Rauchgaskanals (6), der den Grobascheabscheider (16) enthält, an einen Aschetrichter (5) anschließt und daß der Grobascheabscheider (16) am Übergang vom Aschetrichter (5) zum Abschnitt (15) des Rauchgaskanals (6) angeordnet ist.

10. Grobascheabscheider (16)
mit einem Rauchgaskanalabschnitt (15),
und einem Sieb (17), das in dem Rauchgaskanalabschnitt (15) angeordnet ist, wobei sich das Sieb (17) im Wesentlichen über den gesamten Querschnitt des Rauchgaskanalabschnitt (15) erstreckt, und im Wesentlichen parallel zueinander verlaufende Falten (20) aufweist, und wobei das Sieb (17) derart in dem Rauchgaskanalabschnitt (15) angeordnet ist, dass vom Rauchgas mitgeführte Aschepartikel schräg auf die von den Falten (20) gebildete Siebfläche auftreffen und aus den Falten (20) herausfallen.

11. Grobascheabscheider (16) nach Anspruch 10, **dadurch gekennzeichnet, dass** die Falten (20) des Siebes (17) von ebenen, winklig zueinander stehenden Flächenabschnitten (19) gebildet werden.

12. Grobascheabscheider nach Anspruch 11, **dadurch gekennzeichnet, dass** die Flächenabschnitte (19) des Siebes (17) an stromabwärts angeordneten Stützgeflechten (24) anliegen.

13. Grobascheabscheider nach Anspruch 12, **dadurch gekennzeichnet, dass** die Flächenabschnitte (19) des Siebes (17) und die zugehörigen Stützgeflechte (24) auf Rahmen (21) gezogen sind, die an einem Traggestell (22) befestigt sind.

## Claims

1. Coal-fired power station with
- a boiler (1) heatable by a dry firing,
- a flue gas channel (6) which is connected with the boiler (1) and leads to a nitrogen oxide removal catalyser (7) and
- a coarse ash separator (16) which is arranged upstream of the catalyser (7) in a section (15) of the flue gas channel (6) and comprises a sieve (17) extending substantially over the entire cross-section of the flue gas channel (6),
**characterised in that** the sieve (17) of the coarse ash separator (16) is deflectable out of a rest setting by the flue gas flow against the action of a restoring force.

2. Coal-fired power station according to claim 1, **characterised in that** the rest setting of the sieve (17) is defined by an abutment (18).

3. Coal-fired power station according to claim 1 or 2, **characterised in that** the section (15) of the flue gas channel (6) in which the coarse ash separator (16) is arranged extends substantially horizontally and that the sieve (17) of the coarse ash separator (16) is mounted to be pivotable.

4. Coal-fired power station according to claim 3, **characterised in that** the abutment (18) defining the rest setting of the sieve (17) is displaced downstream with respect to the pivot mounting of the sieve (17).

5. Coal-fired power station with
- a boiler (1) heatable by a dry firing,
- a flue gas channel (6) which is connected with the boiler (1) and leads to a nitrogen oxide removal catalyser (7) and
- a coarse ash separator (16) which is arranged upstream of the catalyser (7) in a section (15) of the flue gas channel (6) and comprises a sieve (17) extending substantially over the entire cross-section of the flue gas channel (6),
**characterised in that** the sieve (17) of the coarse ash separator (16) forms folds (20) which are directed upstream and extend substantially parallel to one another.

6. Coal-fired power station according to claim 5, **characterised in that** the folds (20) of the sieve (17) are formed by planar area sections (19) disposed at an angle relative to one another.

7. Coal-fired power station according to claim 6, **characterised in that** the area sections (19) of the sieve (17) bear against support meshes (24) arranged downstream.

8. Coal-fired power station according to claim 7, **characterised in that** the area sections (19) of the sieve (17) and the associated support meshes (24) are drawn onto frames (21) which are fastened to a support framework (22).

9. Coal-fired power station according to one of claims 1 to 8, **characterised in that** the section (15) of the flue gas channel (6), which contains the coarse ash separator (16), adjoins an ash funnel (5) and that the coarse ash separator (16) is arranged at the transition from the ash funnel (5) to the section (15) of the flue gas channel (6).

10. Coarse ash separator (16) with a flue gas channel section (15) and a sieve (17) which is arranged in the flue gas channel section (15), wherein the sieve (17) extends substantially over the entire cross-section of the flue gas channel section (15) and has folds (20) extending substantially parallel to one another and wherein the sieve (17) is arranged in the flue gas channel section (15) in such a manner that ash particles entrained by the flue gas impinge obliquely on the sieve area formed by the folds (20) and drop out of the folds (20).

11. Coarse ash separator (16) according to claim 10, **characterised in that** the folds (20) of the sieve (17) are formed by planar area sections (19) disposed at an angle relative to one another.

12. Coarse ash separator according to claim 11, **characterised in that** the area sections (19) of the sieve (17) bear against support meshes (24) arranged downstream.

13. Coarse ash separator according to claim 12, **characterised in that** the area sections (19) of the sieve (17) and the associated support meshes (24) are drawn onto frames (21) which are fastened to a support framework (22).

## Revendications

1. Centrale à charbon avec
- une cuve (1), pouvant être chauffée par un chauffage à sec,
- un canal de gaz de fumée (6) relié à la cuve (1) qui mène à un catalyseur de dénitrification (7), et
- un séparateur des cendres grossières (16) qui est disposé en amont du catalyseur (7) dans une section (15) du canal de gaz de fumée (6) et présente un tamis (17) qui s'étend sensiblement sur toute la section transversale du canal de gaz de fumée (6), **caractérisée en ce que**
le tamis (17) du séparateur des cendres grossières (16) peut être dévié par le flux des gaz de fumée contre l'effet d'une force de rappel d'une position de repos.

2. Centrale à charbon selon la revendication 1, **caractérisée en ce que** la position de repos du tamis (17) est définie par une butée (18).

3. Centrale à charbon selon la revendication 1 ou 2, **caractérisée en ce que** la section (15) du canal de gaz de fumée (6), dans laquelle est disposé le séparateur des cendres grossières (16), s'étend sensiblement horizontalement, et **en ce que** le tamis (17) du séparateur de cendres grossières (16) est accroché d'une manière articulée.

4. Centrale à charbon selon la revendication 3, **caractérisée en ce que** la butée (18) définissant la position de repos du tamis (17), par rapport à la suspension articulée du tamis (17), est décalée vers l'aval.

5. Centrale à charbon avec
- une cuve (1), pouvant être chauffée par un chauffage à sec,
- un canal de gaz de fumée (6) relié à la cuve (1) qui mène à un catalyseur de dénitrification (7), et
- un séparateur de cendres grossières (16) qui est disposé en amont du catalyseur (7) dans une section (15) du canal de gaz de fumée (6) et présente un tamis (17) qui s'étend sensiblement sur toute la section transversale du canal de gaz de fumée (6), **caractérisé en ce que**
le tamis (17) du séparateur des cendres grossières (16) forme des plis (20) orientés vers l'amont, s'étendant sensiblement parallèlement les uns aux autres.

6. Centrale à charbon selon la revendication 5, **caractérisée en ce que** les plis (20) du tamis (17) sont formés par des sections de face planes (19) s'étendant angulairement les unes aux autres.

7. Centrale à charbon selon la revendication 6, **caractérisée en ce que** les sections de face (19) du tamis (17) s'appliquent à des treillis de support (24) disposés en aval.

8. Centrale à charbon selon la revendication 7, **caractérisée en ce que** les sections de face (19) du tamis (17) et les treillis de support associés (24) sont montés sur des cadres (21) qui sont fixés à un bâti de support (22).

9. Centrale à charbon selon l'une des revendications 1 à 8, **caractérisée en ce que** la section (15) du canal de gaz de fumée (6), qui contient le séparateur des cendres grossières (16), fait suite à une trémie de cendres (5), et **en ce que** le séparateur de cendres grossières (16) est disposé à la transition de la trémie de cendres (5) à la section (15) du canal de gaz de fumée (6).

10. Séparateur des cendres grossières (16)
avec une section de canal de gaz de fumée (15),
et un tamis (17), qui est disposé dans la section (15) du canal des gaz de fumée, où le tamis (17) s'étend sensiblement sur toute la section transversale de la section (15) du canal de gaz de fumée et présente des plis (20) s'étendant sensiblement parallèlement les uns aux autres, et où le tamis (17) est disposé de telle sorte dans la section (15) du canal des gaz de fumée que des particules de cendres entraînées par les gaz de fumée heurtent en biais la face de tamisage formée par les plis (20) et tombent des plis (20).

11. Séparateur des cendres grossières (16) selon la revendication 10, **caractérisé en ce que** les plis (20) du tamis (17) sont formés par des sections de face plane (19) s'étendant angulairement les unes aux autres.

12. Séparateur des cendres grossières selon la revendication 11, **caractérisé en ce que** les sections de face (19) du tamis (17) s'appliquent à des treillis de support (24) disposés en aval.

13. Séparateur des cendres grossières selon la revendication 12, **caractérisé en ce que** les sections de face (19) du tamis (17) et les treillis de support associés (24) sont montés sur des cadres (21), qui sont fixés à un bâti de support (22).
